# EUROPÄISCHE PATENTSCHRIFT

(11) **EP 0 783 859 B1**
(45) Veröffentlichungstag und Bekanntmachung des Hinweises auf die Patenterteilung: **12.09.2001**
(21) Anmeldenummer: 97100510.3
(22) Anmeldetag: 15.01.1997
(51) Int. Cl.: A47J 31/00, A47B 77/08

(54) **Getränkebereiter**
Drink dispenser
Distributeur de boissons

(30) Priorität: 15.01.1996 DE 19601195
(43) Veröffentlichungstag der Anmeldung: 16.07.1997
(73) Patentinhaber: Miele & Cie. GmbH & Co., D-33332 Gütersloh (DE)
(72) Erfinder: Hahn, Uwe, 33332 Gütersloh (DE); Hampf, Holger, 50733 Köln (DE); Plüss, Jürgen, 33334 Gütersloh (DE); Sedlag, Michael, 33613 Bielefeld (DE); Thomkins, Nicolas G., 50937 Köln (DE)

(56) Entgegenhaltungen:
- DE-A- 3 635 669
- DE-A- 4 243 603
- GB-A- 2 021 388
- US-A- 2 514 631

## Beschreibung

Die Erfindung betrifft einen Getränkebereiter mit zwei verschiedenen Funktionsbereichen, wie Bedien- und Ausgabebereich sowie Vorrats- und/ oder Entsorgebereich.

In einem Einbauschrank ist neben diversen Schrankfächern mindestens eine Nische zur Aufnahme eines Haushaltgerätes vorgesehen. Es ist allgemein bekannt, in eine derartige Einbaunische ein Gerät mit Normmaßen, wie beispielsweise Herd, Spülmaschine, Waschmaschine, Kühlschrank maßgenau einzusetzen. In den letzten Jahren hat es sich aber auch durchgesetzt, in den Küchen mindestens ein weiteres Einbaugerät mit kleineren Abmaßen, wie z. B. Mikrowellengerät oder Grill, in eine Nische mit einer durchschnittlichen Höhe von 450 mm einzubauen, um mehr freie Arbeitsfläche zu erhalten. Andere, nur als Standgeräte bekannte Küchengeräte lassen sich bisher jedoch nicht einbauen, da sie nicht auf die üblichen Schrankmaße abgestimmt sind und mehrere Funktionsbereiche aufweisen, die von unterschiedlichen Seiten dieses Gerätes bedient werden müssen. Zu derartigen Geräten zählen im häuslichen Bereich u. a. Getränkebereiter, wie Espresso-, Kaffeemaschine oder Saftzentrifuge. Diese Geräte beanspruchen daher immer einen Stellplatz auf der Arbeitsplatte und besitzen dazu zumeist noch ein von den übrigen Geräten unterschiedliches Design. Damit wird ein einheitliches Gesamterscheinungsbild in einer Küche erheblich gestört.

In der GB-A-20 21 388 wird eine Maschine zur Getränkeausgabe offenbart, bestehend aus einem oben offenen Schrankgehäuse mit darauf angeordnetem Aufsatz und einer schwenkbar angeordneten Tür. Die Maschine ist als Standgerät ausgeführt und nicht zum Einbau in einen standardisierten Küchenschrank mit Nischen geeignet. Die Tür beinhaltet ein Fach zum Abstellen eines Getränkegefäßes mit einer Öffnung im oberen Bereich und daneben ein Bedienpaneel mit Münzeinwurf und Bedienelementen zur Getränkeauswahl. Bei geschlossener Tür ragt eine an einem Getränkeapparat fest angeordnete Ausgabeeinrichtung für Getränke in die Öffnung im Ausgabefach hinein. Der Getränkeapparat steht unterhalb des Aufsatzes auf dem Schrankgehäuse und ist mit dem Vorratsbereich hinter der Tür angeordnet. In dem Aufsatz oberhalb von Gehäuse und Tür ist eine Vorrats- und Spendeeinrichtung für Trinkgefäße untergebracht. Es befinden sich zwar der Bedienbereich und das Ausgabefach an der Tür, aber die Ausgabearmatur wird nicht mit der Tür aufgeschwenkt. Damit tropfen noch anhaftende Reste nach einer Getränkeausgäbe nicht in das Abstellfach bzw. eine Abtropfschale unterhalb des Abstellfaches, sondern unkontrolliert irgendwohin, wenn die Tür geöffnet wird. An ihrer Frontseite ist die Tür bis auf den Bereich des kleinen Ausgabefaches nur in einer Ebene ausgebildet. Eine Anpassung an das Design der übrigen Haushaltgeräte in einer Küche ist dadurch nicht möglich.

In der DE 42 43 603 sind Verblendungen für Einbaumöbelfronten offenbart. Die Verblendung ist den Fronten der übrigen Küchenmöbel angepasst und wegen eines offenen Getränkeausgabefaches in einer Kühlschranktür in zwei Abschnitte geteilt. Mehrere leistenartige Lamellen verbinden die einzelnen Abschnitte miteinander und gleichen unterschiedliche Höhenmaße aus. Diese Anmeldung beschränkt sich allerdings nur auf eine Gestaltung der Verblendung und offenbart kein Einbaugerät, welches ohne eine weitere Anpassung in Höhe, Breite, Tiefe oder im Design in eine Schranknische eingebaut werden kann.

In der DE 36 35 669 ist eine kompakte Bordküche für einen möglichst kleinen Stellplatz offenbart, welche mehrere Geräte und zusätzliche Ablagefächer aufnimmt. Hier sollen auf kleinstem Raum neben einer Heißwasserbereitung auch Speisen erwärmt und Geschirr abgestellt werden. Eine derartige Kompaktanordnung kann weder als Getränkebereiter noch als Haushaltgerät für eine Küche gesehen werden.

Aufgabe der Erfindung ist es daher, einen Getränkebereiter derart auszugestalten, dass er eine Nische eines Küchenschrankes komplett ausfüllt, wobei seine unterschiedlichen Funktionsbereiche einfach erreichbar und sein Design dem der anderen in der Küche befindlichen Einbaugeräte anpassbar sein sollen.

Erfindungsgemäß wird die Aufgabe durch einen Getränkebereiter mit den im Patentanspruch 1 angegebenen Merkmalen gelöst. Vorteilhafte Ausgestaltungen und Weiterbildungen der Erfindung ergeben sich aus den nachfolgenden Unteransprüchen.

Die mit der Erfindung erzielbaren Vorteile liegen insbesondere darin, dass ein Getränkebereiter als Einbaugerät vollständig eine Nische eines Küchenschrankes ausfüllt. Sowohl der Bedien- und Ausgabebereich als Bestandteil einer Tür, als auch Bevorratungs- und/ oder Entsorgungsbereich sind einfach erreichbar, wobei die Ausgabearmaturen über starre und/ oder flexible Verbindungsleitungen lösbar mit dem Vorrats- und Entsorgebereich verbunden sind. Die Bereiche sind entweder alle von der Frontseite oder in ausgezogener Position teilweise von vom und von der Seite bedienbar. Durch die Anordnung des gesamten Bedien-und Ausgabebereiches an einer drehgelenkig gelagerten Tür von dem Vorrats- und/ oder Entsorgebereich sind auch die hinter dem Bedien- und Ausgabebereich liegenden Behälter schnell zugänglich. Diese Behälter können ausgezogen und nachgefüllt bzw. entleert werden. Die drehgelenkige Anordnung der Tür vor dem Vorrats- und Entsorgebereich ermöglicht eine Entnahme bzw. Wiedereingliederung der Vorrats- und/ oder Entsorgungsbehälter vollständig im eingebauten Zustand des gesamten Getränkebereiters. Eine derartige Konstruktionsvariante sieht vor, alle Vorrats- und Entsorgebehälter als nach vom ausziehbare Schubladen auszubilden. Mindestens ein Griffteil ist für eine einfache Bedienbarkeit an deren Vorderseite angeordnet.

In einer besonders vorteilhaften Ausgestaltung ist der Ausgabebereich von einem mindestens dreiseitigen Rahmen umgeben auf dessen einer Seite eine Bedienblende mit mindestens einem Bedienelement und/ oder eine Anzeigeeinrichtung angeordnet ist. Der Rahmen schließt den eingebauten Getränkebereiter in seiner Front mit den angrenzenden Küchenschränken in einer Ebene ab. Eine dreidimensionale Ausbildung der Tür bringt den Vorteil, dass diese neben einem Rahmen, welcher zur Aufnahme der Bedienelemente genutzt werden kann, auch den gesamten Getränkeausgabebereich aufnimmt. Eine vorteilhafte Variante sieht vor, dass der Ausgabebereich nach hinten durch ein Konturblech begrenzt ist, welches lösbar mit dem Rahmen verbunden und/oder zwischen dem Rahmen und einem dahinter liegenden Konstruktionsblech angeordnet ist. An dem den Hintergrund bildenden Konturblech sind die Ausgabearmaturen für ein fertiges Getränk und/ oder für Wasser und/ oder für Dampf in der Tiefe der Tür hinter dem Rahmen angeordnet. Ein derartiges Konturblech schafft ein optisch ansprechendes Erscheinungsbild und bietet außerdem die Möglichkeit, die gesamte Tür in der Gestaltung und Farbwahl den anderen in der Küche vorhandenen Elektrogeräten anzupassen. Die Tür mit dem Bedien- und Ausgabebereich erstreckt sich vorteilhaft über die gesamte Breite der Nische des Küchenschrankes und weist mindestens eine Beleuchtungseinrichtung auf.

Ausführungsbeispiele der Erfindung sind in den Zeichnungen schematisch dargestellt und werden nachfolgend näher erläutert. Es zeigen:
- Figur 1: eine Vorderansicht einer Espressomaschine im eingebauten Zustand,
- Figur 2: eine eingebaute Espressomaschine mit aufgeschwenkter Tür,
- Figur 3: eine auf einem Auszug im Küchenschrank eingebaute Espressomaschine im ausgezogenen Zustand,
- Figur 4: einen Türaufbau,
- Figur 5: eine Espressomaschine auf einem Auszug ohne Schrank.

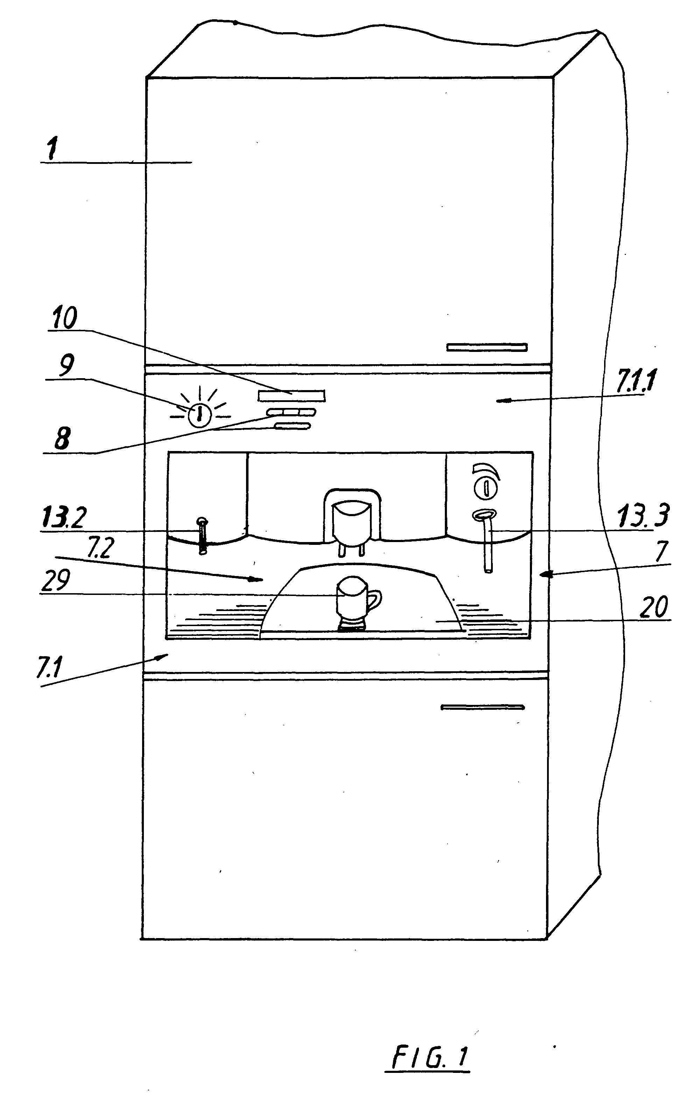

Die Figur 1 zeigt eine Vorderansicht einer in einen Küchenschrank (1) eingebauten Espressomaschine (3). In diesem Beispiel weist die Nische im Küchenschrank (1) eine Höhe von ca. 450 mm auf. Ein derartiges Nischenmaß wird von Küchenherstellern beispielsweise zum Einbau eines Mikrowellengerätes angeboten. Natürlich können auch andere Nischenmaße zum Einbau eines Getränkebereiters (3) gewählt werden, wobei dann aber das gesamte Gerät (3) oder wenigstens die Gerätetür (7) diesen Maßen angepaßt werden muß. Als Getränkebereiter (3) sind außer einer Espressomaschine natürlich auch Kaffeemaschinen, Kombinationen beider Kaffeebereiter, Teebereiter, Saftzentrifungen oder dgl. anzusehen und sind erfindungsgemäß in einen Küchenschrank (1) einbaubar. Bei all diesen Geräten sind mindestens zwei unabhängige Funktionsbereiche (4, 5) vorhanden. Ein Funktionsbereich ist als Bedien- und Ausgabebereich (4), der andere als Vorrats- und/ oder Entsorgebereich (5) definiert. Der Bedien- und Ausgabebereich (4) ist trennbar von dem zweiten Bereich (5) ausgebildet. Das bringt neben einer einfachen Bedienbarkeit zur Getränkeauswahl auch den Vorteil, daß beide Bereiche (4, 5) hintereinander angeordnet sein können und im eingebauten Zustand trotzdem leicht erreichbar sind.

Der Bedien- und Ausgabebereich (4) ist Bestandteil einer aufschwenkbaren Tür (7), erstreckt sich über die gesamte Nischenbreite und ist drehgelenkig vor dem Vorrats- und/ oder Entsorgebereich (5) angeordnet. Die Produktausgabe erfolgt im mittleren Türinnenraum (7.2) und ist von einem umlaufenden Rahmen (7.1) umgeben. Der Rahmen (7.1) befindet sich mit seiner vorderen Front in einer Ebene mit den angrenzenden Küchenschränken. Die obere Seite des Rahmens (7.1) ist als Bedienblende (7.1.1), entsprechend einer Herdblende ausgebildet. Auf ihr sind die Bedienelemente zur Steuerung (8) der Espressomaschine (3), ein Hauptschalter (9) u.a. zur Inbetriebsetzung und/ oder ein digitales Anzeigendisplay (10) ergonomisch und optisch vorteilhaft angeordnet. Die Bedienblende (7.1.1) unterscheidet sich weder im Design noch in der Funktion von bekannten Bedienblenden an Haushaltgroßgeräten. Auf dem Anzeigendisplay (10) sind die eingestellte Funktion, die Uhrzeit, eine Kurzeit und/ oder auch andere Hinweise für die Handhabung des Getränkebereiters (3) darstellbar. Hinter der Bedienblende (7.1.1) ist eine nicht dargestellte Griffmulde zum Öffnen der Tür angeordnet. Es ist allerdings auch nicht ausgeschlossen, einen Bügelgriff, entsprechend den an Backofentüren, an der Türaußenseite anzuordnen. Der mittlere Türinnenraum (7.2) gleicht optisch einem Fensterausschnitt eines Backofens und entspricht dem Bereich der Flüssigkeits- bzw. Getränkeausgabe (7.2). Er erstreckt sich frontseitig offen zum Eingreifen bis in die Tiefe der Tür (7) hinein. In diesem Bereich (7.2) sind insbesondere die Ausgabearmaturen (13) für das fertige Getränk (13.1), Wasser (13.2) und/ oder Dampf (13.3) zum Aufschäumen von Getränken angeordnet. Die Tür (7) wird zum Geräteinneren durch ein Konturblech (15) begrenzt, welches den Einsicht- und den Eingriffbereich ins Innere des Getränkebereiters (3) begrenzt. Dadurch stellt der Ausgabebereich (7.2) einen abgeschlossenen Raum dar. Direkt unterhalb des Ausgabebereiches (7.2) befindet sich eine in der Figur nicht dargestellte Auffangwanne für über- bzw. vorbeigelaufene Flüssigkeiten, welche mit einer durchbrochenen Stellfläche (20) für ein oder mehrere Trinkgefäße (29) bedeckt ist. Diese Stellfläche (20) ist entweder nach oben oder nach vom abnehmbar, um die darunter befindlichen Behälter entnehmen und reinigen zu können. Um die Stellfläche (20) optisch aufzulockern, ist eine unterschiedliche Gestaltung der Durchbrüche vorteilhaft. Durch eine abwechselnde Gestaltung der einzelnen Stellbereiche, wie Gitterrost, Schlitze und/ oder Lochbleche kann ein Erleichtem der Zuordnung der unterschiedlichen Flüssigkeitsaustrittsbereiche (13.1 -13.3) erreicht werden. Unter den seitlichen Bereichen der Stellfläche (20) kann eine Heizeinrichtung angeordnet sein, um die Stellfläche (20) als Vorwärmeinrichtung für die Trinkgefäße nutzen zu können.

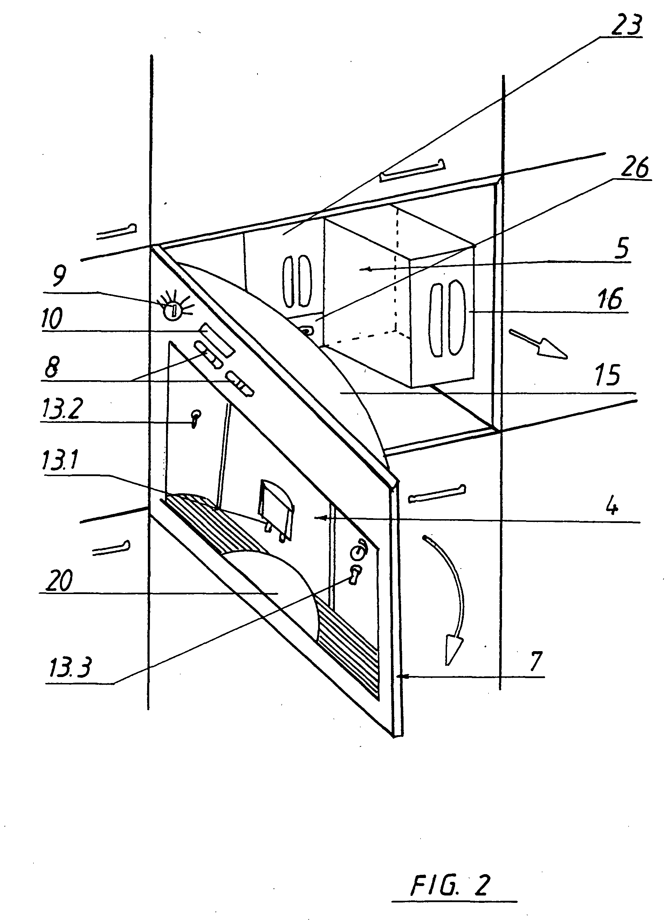

Die Figur 2 zeigt eine eingebaute Espressomaschine (3) mit geöffneter Tür (7). Hinter der offenen Tür (7) ist der Vorrats- und/ oder Entsorgebereich (5) sichtbar und zugänglich geworden. Die Wasserversorgung zu einer nicht dargestellten Brüheinheit kann entweder über einen direkten Wasseranschluß oder von einem entnehmbaren und separat auffüllbaren Vorratsbehälter (16) erfolgen. Die Vorratsbehälter für Wasser (16) und Kaffee (23) sind hier ebenso wie der Auffangbehälter (26) für den bei einem Brühvorgang entstehenden Kaffeekuchen als ausziehbare Schubladen ausgebildet. Neben oder hinter diesen Schubladen (16, 26) sind die für einen Kaffeebereiter notwendige Brüheinheit und ein eventuell notwendiges Mahlwerk für Kaffeebohnen untergebracht. Diese können sich hinter den Schubladen (16, 26) befinden, weil der Benutzer hierzu keinen direkten Zugang haben muß. Eine Wartung und/ oder Reparatur dieser Geräteeinheiten sollte grundsätzlich von einem Kundendiensttechniker durchgeführt werden. Dieser kann das Gerät (3) im Bedarfsfall, analog wie andere Einbaugeräte auch, vom Küchenschrank (1) lösen und das gesamte Gerät (3) herausziehen. Zum Nachfüllen und/ oder Entleeren der einzelnen Behälter (16, 23, 26) muß aber nur die Tür (7) geöffnet werden und alle Behälter (16, 23, 26) sind einfach von vom bedienbar. Vom Vorratsbereich (5) reichen starre oder flexible Verbindungsleitungen (21) zu den davor bzw. dahinter liegenden Teilen des Gerätes (3). Die Verbindungsleitungen (21) zu den vorderen Armaturen (13) lösen sich automatisch von diesen, wenn die Tür (7) geöffnet wird. Sie (21) sind so positioniert, daß sie beim Schließen der Tür (7) selbständig und direkt von hinten in die in der Tür (7) vorhandenen Ausgabearmaturen (13) eingreifen. Innerhalb der Tür (7), vorzugsweise hinter der Bedienblende (7.1), kann eine Beleuchtungseinrichtung positioniert werden, um bei Bedarf den Ausgabebereich erhellen zu können. Mit dem Hauptschalter (9) wird das Gerät (3) eingeschaltet und es können ein Betrieb oder eine Betriebsbereitschaft mit oder ohne Beleuchtung angewählt werden.

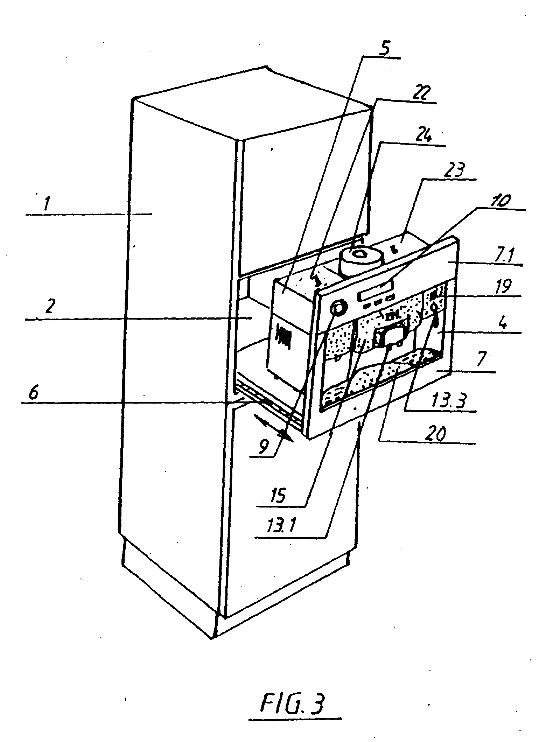

Die Figur 3 zeigt ein anderes mögliches Beispiel eines eingebauten Getränkebereiters (3). Dieser (3) ist auf einem nach vom ausziehbaren Fachboden im Küchenschrank (1) angeordnet. Auch bei einer derartigen Einbauvariante ist der Bedien- und Ausgabebereich (4) Bestandteil einer Tür (7) und vom Vorrats- und Entsorgebereich (5) trennbar. Hinter der Tür (7) wird hier der Vorrats- und Entsorgebereich eines übllichen Standgerätes fast ohne konstruktive Veränderungen eingesetzt. Bei einem derartigen Gerät (3) können die Vorratsbehälter (16, 23) allerdings nur im ausgezogenen Zustand von der Seite entnommen, nachgefüllt bzw. entleert werden. Ein derartiges Einbaugerät hat den Vorteil, daß die Herstellungskosten relativ gering gehalten werden können. Hinter dem Rahmen (7.1) ist ebenfalls ein Konturblech (15) in der Tür (7) angeordnet, welches den Einsicht- und den Eingriffbereich ins Innere der Nische begrenzt. So stellt der Ausgabebereich (7.2) auch bei diesem Beispiel einen abgeschlossenen Raum dar. Die Vorratsbehälter (16) für Wasser oder andere Flüssigkeiten, Kaffeebohnen oder -pulver (23) und ein nicht dargestellter Auffangbehälter für Kaffeekuchen (26) sind optisch versteckt hinter diesem Konturblech vorhanden. Zum Nachfüllen und/ oder Entleeren der Behälter (16, 23, 26) wird der Fachboden mit dem Einbaugerät (3) aus der Nische des Küchenschrankes (1) herausgezogen. Die Vorratsbehälter (16, 23) sind seitlich befüllbar und der Behälter (26) ebenso von der Seite zugänglich entleerbar.

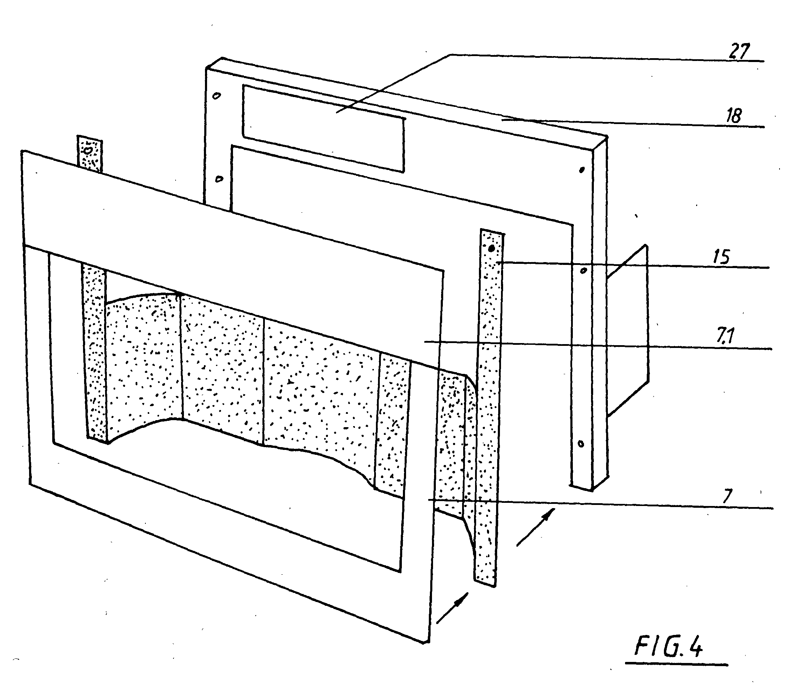

Die Figur 4 zeigt einen möglichen Aufbau der konstruktiven Grundbestandteile einer Gerätetür (7) für einen Getränkebereiter (3). Diese Tür (7) besteht aus einem Rahmen (7.1) und einem dahinter angeordneten Konturblech (15) mit Aussparungen für die Aufnahme von Auslaßarmaturen (13). Ebenso können hier auch Lüftungsschlitze oder andere notwendige Öffnungen eingearbeitet werden. Das Konturblech (15) verhindert eine Einsicht auf die hinteren Bereiche des Getränkebereiters (3). Im Konturblech (15) ist es auch möglich, daß seitlich diverse Durchbrüche eingearbeitet werden, welche die Vorrats- und/ oder Auffangbehälter (16, 23, 26) als Schubfach aufnehmen können. Bei einer derartigen konstruktiven Ausgestaltung muß die Anordnung der Auslaßarmaturen (13) allerdings so erfolgen, daß alle Bereiche bequem zugänglich sind. Eine vollständige Bedienung des Getränkebereiters (3) kann dann von der Frontseite erfolgen, ohne daß eine Tür geöffnet werden muß. Ein Auszug des gesamten Getränkebereiters (3) aus der Nische ist nur noch zu Wartungs- oder Reparaturzwecken notwendig. Das Konturblech (15) ist vorteilhafterweise lösbar durch Schraubverbindungen mit dem Türrahmen (7.1) verbunden. Ebenso sind hier aber auch feste und unlösbare Verbindungen denkbar. Im vorliegenden Beispiel ist das Konturblech (15) zwischen dem Türrahmen (7.1) und einem Konstruktionsblech (18) festgelegt, wobei das Konstruktionsblech (18) die einzelnen Teile (7.1, 15) miteinander verbindet. Im Konstruktionsblech (18) sind die nötigen Aussparungen für die Verbindungsleitungen (21) von den hinten liegenden Behältern und der Brüheinheit zu den Auslaßarmaturen (13) vorgesehen. Der Türrahmen (7.1) ist in Form und Material so gestaltbar, daß er im Design den anderen in der Küche vorhandenen Haushaltgeräten angepaßt ist.

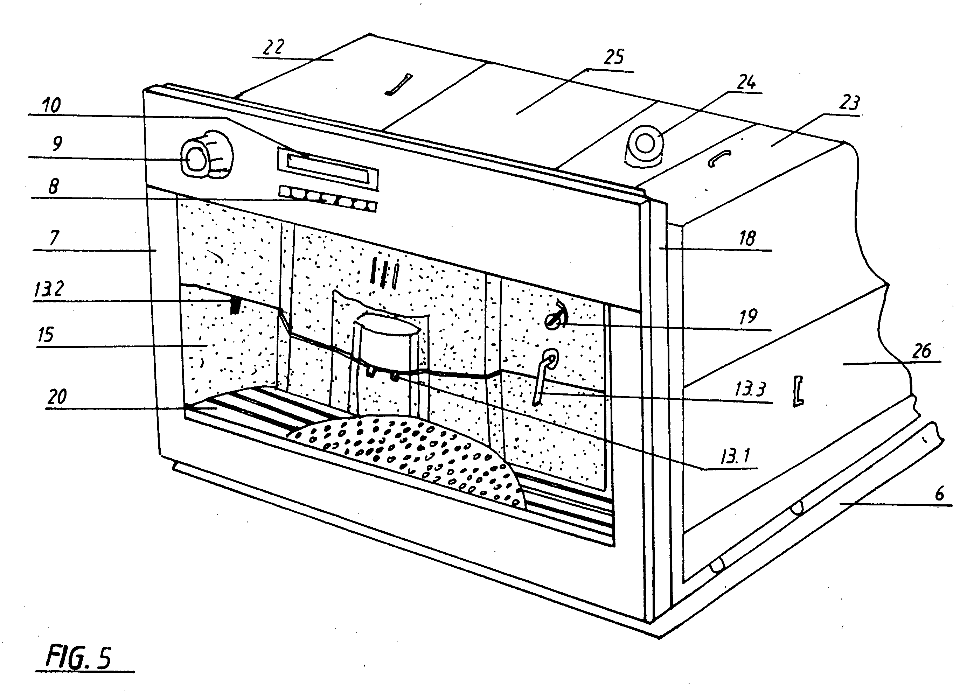

Die Figur 5 zeigt eine aus einer Nische des Küchenschrankes (1) auf einem Schrankboden herausgezogene Espressomaschine (3) mit einer geschlossenen Tür (7). Das Konstruktionsblech (18) drückt das Konturblech (15) von hinten fest gegen den Türrahmen (7.1) und verbindet diese Teile mit dem ausziehbaren Schrankboden. Die Bedienelemente (8, 9) des Getränkebereiters (3) sind im oberen Bereich des Rahmens (7.1) in einer Bedienblende (7.1.1) angeordnet. Neben einem Hauptschalter (9) sind dort Funktionseinstellelemente (8) und ein Anzeigendisplay (10) untergebracht. In diesem Display (10) sind entweder die gewählte Funktion des Getränkebereiters (3), die Uhrzeit oder eine Kurzzeit darstellbar. Mit dem Hauptschalter (9) kann beispielsweise eingestellt werden: "Verriegelung", "Programm", "Licht", "Gerät Aus", "Betrieb bereit - mit Licht" (Stand by-1), "Betrieb bereit - ohne Licht" (Stand by-2). Es kann aber die Steuerung auch so erfolgen, daß andere Hinweise zur Handhabung des Getränkebereiters einstellbar und sichtbar gemacht werden können. Eine entsprechende Programmierbarkeit dieser nicht dargestellten Steuereinheit erlaubt es, im Anzeigedisplay (10) eine Anzeige in unterschiedlichen Sprachen zu gewährleisten, ohne konstruktive Veränderungen vornehmen zu müssen. Mit den Funktionsschaltem (8) wird die Funktion des Getränkebereiters (3) eingestellt. Die Menge des Wassers wird bestimmt, die für ein Getränk gewünscht wird. Es kann beispielsweise ein Espresso mit wenig Wasser oder ein Kännchen Kaffee mit viel Wasser ebenso gewählt werden, wie nur eine Tasse mit heißem Wasser zum Reinigen des Getränkebereiters (3) bzw. zum Vorwärmen der Tassen. Der Ausgabebereich (5) der Espressomaschine (3) ist mittig im Türrahmen (7.1) angeordnet, entspricht von seinem Design einem Fenster im Backofen, ist jedoch nicht notwendig mit einer Scheibe verschließbar.

## Patentansprüche

1. Einbaugerät mit einem Getränkebereiter, geeignet für einen Einbau in einen Küchenschrank, mit einem Vorrats- und/ oder Entsorgebereich, einer Bedienblende mit Bedienelementen und einem frontseitig offenen Ausgabebereich mit einer Ausgabearmatur und einer Stellfläche f0r Trinkgefaße
**dadurch gekennzeichnet,**
**dass** das Einbaugerät eine Tür (7) aufweist, welche getrennt von dem Vorrats- und/ oder Entsorgebereich (5) angeordnet ist und
dass die Bedienblende (7.1.1) mit den Bedienelementen (8, 9) und der Ausgabebereich (7.2) Bestandteile der Tür (7) sind, wobei in dem Ausgabebereich (7.2) Ausgabearmaturen für ein fertiges Getränk (13.1) und/ oder für Wasser (13.2) und/ oder für Dampf (13.3) angeordnet sind.

2. Einbaugerät nach Anspruch 1,
**dadurch gekennzeichnet,**
**dass** die Tür (7) drehgelenkig vor dem Vorrats- und/ oder Entsorgebereich (5) angeordnet ist und sich über die gesamte Nischenbreite des Küchenschrankes (1) erstreckt.

3. Einbaugerät nach mindestens einem der Ansprüche 1 bis 2,
**dadurch gekennzeichnet,**
**dass** die Tür (7) um den Ausgabebereich (7.2) einen mindestens dreiseitigen Rahmen (7.1) aufweist,
wobei eine Seite des Rahmens (7.1) die Bedienblende (7.1.1) mit mindestens einem Bedienelement (8, 9) und/ oder einer Anzeigeeinrichtung (10) bildet

4. Einbaugerät nach mindestens einem der Ansprüche 1 bis 3,
**dadurch gekennzeichnet,**
**dass** die Bedienblende (7.1.1) oberhalb des Ausgabebereiches (7.2) angeordnet ist und sich über die gesamte Breite der Tür (7) erstreckt.

5. Einbaugerät nach mindestens einem der Ansprüche 1 bis 4,
**dadurch gekennzeichnet**.
dass die Tür (7) hinter dem Ausgabebereich (7.2) durch ein Konturblech (15) begrenzt ist, welches lösbar mit dem Rahmen (7.1) verbunden und/oder zwischen dem Rahmen (7.1) und einem dahinter liegenden Konstruktionsblech (18) angeordnet ist.

6. Einbaugerät nach mindestens einem der Ansprüche 1 bis 5,
**dadurch gekennzeichnet,**
**dass** die Ausgabearmaturen für ein fertiges Getränk (13.1) und/ oder für Wasser (13.2) und/ oder für Dampf (13.3) an dem Konturblech (15) in der Tiefe der Tür (7) hinter dem Rahmen (7.1) angeordnet sind.

7. Einbaugerät nach mindestens einem der Ansprüche 1 bis 6,
**dadurch gekennzeichnet,**
**dass** an der Tür (7) mindestens eine Beleuchtungseinrichtung angeordnet ist.

8. Einbaugerät nach mindestens einem der Ansprüche 1 bis 7,
**dadurch gekennzeichnet**.
dass unterhalb der Stellfläche (20) mindestens teilweise eine Auffangeinrichtung für überlaufende Flüssigkeiten angeordnet ist.

9. Einbaugerät nach mindestens einem der Ansprüche 1 bis 8,
**dadurch gekennzeichnet,**
**dass** der Vorrats- und Entsorgebereich (5) neben einem Mahlwerk (24) und einer Brüheinheit (25) einen Wasserbehälter (16), mindestens einen Vorratsbehälter (23) für Kaffeebohnen und/ oder gemahlenen Kaffee und einen Auffangbehälter (26) für Kaffeekuchen enthält.

10. Einbaugerät nach Anspruch 9,
**dadurch gekennzeichnet,**
**dass** die Behälter (16, 23, 26) bei geöffneter Tür (7) zugänglich sind und als nach vorn ausziehbare Fächer ausgebildet sind.

11. Einbaugerät nach mindestens einem der Ansprüche 1 bis 10,
**dadurch gekennzeichnet,**
**dass** die Behälter (16, 23, 26) nebeneinander angeordnet sind.

12. Einbaugerät nach mindestens einem der Ansprüche 1 bis 11,
**dadurch gekennzeichnet,**
**dass** eine Flüssigkeitszuleitung zur Brüheinheit (25) über eine feste Installation zu einem Tankbehälter oder über eine Wasserleitung oder über den entnehmbaren Wasserbehälter (16) erfolgt.

13. Einbaugerät nach mindestens einem der Ansprüche 1 bis 9,
**dadurch gekennzeichnet,**
**dass** der Vorrats- und Entsorgebereich (5) aus dem Küchenschrank (1) auf einem Auszug (6) herausziehbar angeordnet ist.

## Claims

1. Built-in appliance, which is provided with a drink-making machine and is suitable for being built into a kitchen cabinet, said appliance having a supply and/or discharge region, a control panel provided with controls, and a dispensing region which is open at the front end and has a dispensing arrangement and a supporting face for drinking vessels, **characterised in that** the built-in appliance has a door (7), which is disposed separately from the supply and/or discharge region (5), and in that the control panel (7.1.1), provided with the controls (8, 9), and the dispensing region (7.2) are component parts of the door (7), dispensing arrangements for dispensing a prepared drink (13.1) and/or for water (13.2) and/or for steam (13.3) being disposed in the dispensing region (7.2).

2. Built-in appliance according to claim 1, **characterised in that** the door (7) is pivotally disposed in front of the supply and/or discharge region (5) and extends over the entire niche width of the kitchen cabinet (1).

3. Built-in appliance according to at least one of claims 1 to 2, **characterised in that** the door (7) has a frame (7.1), which is at least three-sided, around the dispensing region (7.2), one side of the frame (7.1) forming the control panel (7.1.1) which is provided with at least one control (8, 9) and/or one display means (10).

4. Built-in appliance according to at least one of claims 1 to 3, **characterised in that** the control panel (7.1.1) is disposed above the dispensing region (7.2) and extends over the entire width of the door (7).

5. Built-in appliance according to at least one of claims 1 to 4, **characterised in that** the door (7) is defined, behind the dispensing region (7.2), by a shaped panel (15), which is detachably connected to the frame (7.1) and/or is disposed between the frame (7.1) and a structural panel (18) lying behind said frame.

6. Built-in appliance according to at least one of claims 1 to 5, **characterised in that** the dispensing arrangements for dispensing a prepared drink (13.1) and/or for water (13.2) and/or for steam (13.3) are disposed on the shaped panel (15) in the depth of the door (7) behind the frame (7.1).

7. Built-in appliance according to at least one of claims 1 to 6, **characterised in that** at least one illuminating means is disposed on the door (7).

8. Built-in appliance according to at least one of claims 1 to 7, **characterised in that** a means for collecting overflowing liquids is disposed, at least partially, beneath the supporting face (20).

9. Built-in appliance according to at least one of claims 1 to 8, **characterised in that**, in addition to having a grinder (24) and a boiler unit (25), the supply and discharge region (5) includes a water container (16), at least one supply container (23) for coffee beans and/or ground coffee and a storage container (26) for coffee cakes.

10. Built-in appliance according to claim 9, **characterised in that** the containers (16, 23, 26) are accessible when the door (7) is open and are in the form of compartments which can be extracted forwardly.

11. Built-in appliance according to at least one of claims 1 to 10, **characterised in that** the containers (16, 23, 26) are disposed adjacent one another.

12. Built-in appliance according to at least one of claims 1 to 11, **characterised in that** liquid is supplied to the boiler unit (25) via a fixed installation integral with a tank or via a water pipe or via the removable water container (16).

13. Built-in appliance according to at least one of claims 1 to 9, **characterised in that** the supply and discharge region (5) is arranged so as to be extractable from the kitchen cabinet (1) on a drawer (6).

## Revendications

1. Appareil encastrable comprenant un distributeur de boissons et destiné à être intégré dans un placard de cuisine, comprenant une zone de stockage de provisions et/ou d'élimination de déchets, un panneau de commande avec des éléments de commande et une zone de distribution ouverte sur le devant avec un robinet de distribution et un support pour poser des récipients de boissons, **caractérisé en ce que** l'appareil encastrable présente une porte (7) qui est disposée séparément de la zone de stockage des provisions et/ou d'élimination des déchets (5) et en ce que le panneau de commande (7.1.1) avec les éléments de commande (8, 9) et la zone de distribution (7.2) font partie intégrante de la porte (7), des robinets de distribution pour une boisson finie (13.1) et/ou pour de l'eau (13.2) et/ou pour de la vapeur (13.3) étant disposés dans la zone de distribution (7.2).

2. Appareil encastrable selon la revendication 1, **caractérisé en ce que** la porte (7) est disposée de façon articulée en avant de la zone de stockage des provisions et/ou d'élimination des déchets (5) et s'étend sur toute la largeur de la niche du placard de cuisine (1).

3. Appareil encastrable selon au moins l'une des revendications 1 et 2, **caractérisé en ce que** la porte (7) présente autour de la zone de distribution (7.2) un cadre à au moins trois côtés (7.1), un côté du cadre (7.1) formant le panneau de commande (7.1.1) comportant au moins un élément de commande (8, 9) et/ou un dispositif indicateur (10).

4. Appareil encastrable selon au moins l'une des revendications 1 à 3, **caractérisé en ce que** le panneau de commande (7.1.1) est situé au-dessus de la zone de distribution (7.2) et s'étend sur toute la largeur de la porte (7).

5. Appareil encastrable selon au moins l'une des revendications 1 à 4, **caractérisé en ce que** la porte (7) est délimitée derrière la zone de distribution (7.2) par une tôle profilée (15) qui est reliée de façon amovible au cadre (7.1) ou qui est disposée entre le cadre (7.1) et une tôle du bâti (18) située derrière ce dernier.

6. Appareil encastrable selon au moins l'une des revendications 1 à 5, **caractérisé en ce que** les robinets de distribution pour une boisson finie (13.1) et/ou pour de l'eau (13.2) et/ou pour de la vapeur (13.3) sont disposés sur la tôle profilée (15), dans la profondeur de la porte (7), en retrait par rapport au cadre (7.1).

7. Appareil encastrable selon au moins l'une des revendications 1 à 6, **caractérisé en ce qu'**au moins un dispositif d'éclairage est disposé sur la porte (7).

8. Appareil encastrable selon au moins l'une des revendications 1 à 7, **caractérisé en ce qu'**en dessous du support (20), au moins sous une partie de celui-ci, est disposé un dispositif collecteur pour recueillir les excédents de liquide.

9. Appareil encastrable selon au moins l'une des revendications 1 à 8, **caractérisé en ce que** la zone de stockage de provisions et d'élimination des déchets (5) contient, outre un moulin (24) et une bouilloire (25), un réservoir d'eau (16), au moins un réservoir de stockage (23) pour du café en grains et/ou du café moulu et un récipient collecteur (26) pour le marc de café.

10. Appareil encastrable selon la revendication 9, **caractérisé en ce que** les récipients (16, 23, 26) sont accessibles lorsque la porte (7) est ouverte et sont réalisés sous la forme de compartiments à tiroir.

11. Appareil encastrable selon au moins l'une des revendications 1 à 10, **caractérisé en ce que** les récipients (16, 23, 26) sont disposés côte à côte.

12. Appareil encastrable selon au moins l'une des revendications 1 à 11, **caractérisé en ce que** le liquide est amené à la bouilloire (25) par le biais d'une installation fixe provenant d'une citerne, ou par le biais d'une conduite d'eau ou par le biais du réservoir d'eau (16) amovible.

13. Appareil encastrable selon au moins l'une des revendications 1 à 9, **caractérisé en ce que** la zone de stockage des provisions et d'élimination des déchets (5) est disposée sur un plateau à tiroir (6) pouvant être extrait du placard de cuisine (1).
